# EUROPEAN PATENT SPECIFICATION

(11) **EP 4 321 019 B1**
(45) Date of publication and mention of the grant of the patent: **13.08.2025**
(21) Application number: 22728991.5
(22) Date of filing: 05.04.2022
(51) Int. Cl.: A01K 39/012, A01K 61/85

(54) **AUTOMATED DEVICE FOR CONTROLLED FEEDING OF SUBSTANCES TO ANIMAL CONTAINMENT RECIPIENTS, RELATED SYSTEM AND METHOD**
AUTOMATISIERTE VORRICHTUNG ZUR KONTROLLIERTEN ZUFÜHRUNG VON SUBSTANZEN AN EMPFÄNGER IN TIERBEHAUSUNGEN, ENTSPRECHENDES SYSTEM UND VERFAHREN
DISPOSITIF AUTOMATISÉ POUR L'ALIMENTATION CONTRÔLÉE EN SUBSTANCES DES RÉCIPIENTS DE CONFINEMENT DES ANIMAUX, SYSTÈME ET MÉTHODE CORRESPONDANTS

(30) Priority: 06.04.2021 PT 2021117161
(43) Date of publication of application: 14.02.2024
(73) Proprietor: Fundação D. Anna de Sommer Champalimaud e Dr. Carlos Montez Champalimaud Foundation, 1400-038 Lisboa (PT); Idmind - Engenharia De Sistemas, Lda, 1600-546 LISBOA (PT)
(72) Inventor: RIBEIRO DE SOUSA, Almor Ricardo, 2745-808 QUELUZ (PT); FERNANDES DA SILVA MARQUES, Carlos Alberto, 2790-017 CARNAXIDE (PT); GASPAR LOPES, Joana, 2655-130 CARVOEIRA MFR (PT); GONÇALVES ALVITO, Paulo Jorge, 1990-384 MOSCAVIDE (PT); CAETANO CERTAL AFONSO, Ana Catarina, 1500-156 LISBOA (PT); FREIRE DE CASTIÇO MONTEIRO, Joana, 2770-213 PAÇO DE ARCOS (PT)
(74) Representative: Monteiro Alves, Inês
(86) International application number: PCT/PT2022/050015
(87) International publication number: WO 2022/216168

(56) References cited:
- EP-A1- 2 878 193
- WO-A1-2009/072982
- CN-A- 111 109 204
- CN-U- 207 151 602
- US-B2- 8 499 719

## Description

### TECHNICAL DOMAIN

The present invention refers to an automated device, a system and method for the controlled feeding of substances to animal containment recipients in an animal breeding facility, which includes at least one rack for animal containment recipients arranged in lines (1) comprising a plurality of animal containment recipients (2), wherein said recipients are arranged in the form of a grid on said rack.

### PRIOR ART

Many laboratories and research centers use facilities for the breeding and reproduction of animals, aiming at the generation of specimens for experimental procedures. Among the facilities for the breeding and reproduction of animals most typically used, we can reference those related to the breeding of fish, which may have several racks for animal containment recipients usually comprising 10 to 20 animal containment recipients per row in each rack, namely tanks or aquariums. A plurality of racks is also frequently used for animal containment recipients, disposed in lines, wherein the total number of containment recipients may be higher than 2500 tanks.

Therefore, the animals can be fed manually, which may require a high demand of human resources, since the professionals in charge of feeding the animals contained in the containment recipients have to carry out various tasks related with the feeding, several times per day, including the administration of different types of nutrients or feeds, and said tasks would also have to be carried out at weekends and on holidays.

The state of the art also presents automated systems for feeding animals in said breeding facilities, though these systems are dedicated to just a few racks of animal containment recipients. Therefore, when the animal breeding facility comprises various lines of racks, there is a need to install an automated system for each one of the lines, which will certainly trigger a significant increase in operating and maintenance costs for the various automated systems which would be required. The increase in costs may be exacerbated in cases where the animal breeding facilities operate below their nominal capacity, which may result in certain automated systems of a given line of racks not being used, that is, being idle.

Document CN207151602U discloses a fully automatic feed feeding vehicle for reducing the waste in the feeding process and performing the automatic cruise and path planning to increase feed efficiency and save labor costs.

The fully automatic feed feeding vehicle disclosed in CN207151602U comprises: a frame, an elevating mechanism disposed on the frame, a hopper that is pulled by the elevating mechanism and can move up and down, and is located on two frames of the frame. A first infrared sensor and a second infrared sensor are located at the ends of the frames, and a control system is disposed thereon. A side of the silo forms a hopper, and at the bottom of the silo, there is a bin door that opens and closes the hopper. A third infrared sensor for detecting feed is arranged at the side of the hopper and an electromagnetic cylinder is arranged at the bottom of the silo, and the hopper is driven to reciprocate by the electromagnetic cylinder.

Document CN111109204A discloses a yellow mealworm automatic breeding system comprising a central control unit, a breeding conveying device, sieving conveying devices, and an automatic feeding device. The breeding conveying device comprises three or more breeding frames arranged in a stage shape from high to low, and each breeding frame is provided with a belt conveying assembly to correspondingly form multi-stage conveying; one sieving conveying device is arranged between every two adjacent breeding frames for performing sieving on worm skin, worm bodies and worm excrement conveyed by the upper stage of belt conveying assembly under the control of the central control unit, so that the sieved worm bodies enter the next stage of belt conveying assembly for continuous breeding.

The automatic feeding device disclosed in CN111109204A is movably arranged on one side of the multiple breeding frames and is used for carrying out uniform feeding on the yellow mealworms on the multiple belts conveying assemblies through movement under the control of the central control unit. The automatic breeding system has the advantages that the operation is convenient, the intelligent degree is high, the breeding efficiency is high, the breeding effect is good, the occupied area is small, and the labor intensity can be greatly reduced.

### PROBLEMS OF PRIOR ART

North-American patent US8499719B2, by Marco Brocca and Giovanni Frangelli and published on August 6, 2013, refers to a robotic system for feeding and breeding fish, namely zebrafish intended for laboratory tests and bred in racks with a plurality of tanks, with the feed dosage system being able to move along a system of Cartesian axes.

The Chinese patent application CN105684979A, by Zhang Qiong and published on June 22, 2016, refers to an automatic system for the feeding/breeding of zebrafish for experimental applications comprising a feed dispenser, which is configured for dispensing feeds to a tank with fish, wherein the feed dispenser has a vertical movement along a vertical track. Additionally, there is a device that confers horizontal movement along an horizontal track.

The international patent application WO2009072982A1, by Lau Lionel et al. and published on June 11, 2009, also refers to an automated system for feeding fish, namely zebrafish for experimental purposes, present in a plurality of tanks, disposed in rows and columns. The feed dosing system disclosed in WO2009072982A1 comprises a plurality of syringes, wherein each one of the syringes provides the feed paste to the breeding tanks. The feed dosing system comprises vertical and horizontal tracks and engagement means for transporting syringes to each one of the tanks. Additionally, a programmable logic controller controls the movement of the syringe along the horizontal and vertical axes.

In this sense, said documents of the state of the art indicate that the feed dosing system should be connected and dedicated to each line of racks (1) containing animal containment recipients (2).

### SUMMARY OF THE INVENTION

The present invention refers, in a first aspect, to an automated device for the controlled feeding of substances to animal containment recipients in an animal breeding installation, which includes at least one rack for animal containment recipients arranged in a line (1) comprising a plurality of animal containment recipients (2), wherein said recipients are arranged in the form of a grid on said rack, comprising:
a robot (3), which comprises a locomotion platform (4); a lifting mechanism (5); a feeding platform (6); a feeding circuit (7); and a central processing unit (8);
wherein the robot (3) is configured to travel on at least one horizontal, linear track (9), which is disposed parallel to each rack for animal containment recipients disposed in a line (1), wherein a reflective strip (10) is disposed next to a terminal position of said horizontal, linear track (9);
wherein the locomotion platform (4) comprises at least one drive wheel (11); a first motorization unit (12) and a sensorial navigation unit (13); the sensorial navigation unit (13) being configured to locate and navigate the platform in the workspace and to detect the reflective strip (10) and the first motorization unit (12) configured to move the locomotion platform (4) along the horizontal, linear track (9);
wherein the lifting mechanism (5) comprises a lifting rod (14), which is perpendicular to the horizontal, linear track (9); and a second motorization unit (16), which is configured to move the feeding platform (6) along the lifting rod (14); and the lifting mechanism (5) is connected to the locomotion platform (4);
wherein the feeding platform (6) comprises a gear rack (17), which is connected to a feed head (43); a sensorial feeding unit (18), which is configured to send data to the central processing unit (8) regarding the position of the feed head (43) in relation to the feeding zone of the animal containment recipient (2); a second processing unit (19); a third motorization unit (20), which is configured to move the gear rack (17) along a horizontal axis, which is perpendicular to the lifting rod (14), for the feed head (43) to reach the substance feeding zone in an animal containment recipient (2);
wherein the feeding circuit (7) comprises one or more feeding circuits selected from the group consisting of a dry feeding circuit (21) and a liquid feeding circuit (22);
wherein the central processing unit (8) receives data regarding position, orientation and speed relating to the locomotion platform (4), said data being collected by the sensorial navigation unit (13) and processed by the central processing unit (8);
wherein the central processing unit (8) receives data on feeding parameters for each animal containment recipient (2), said data being collected by the sensorial feeding unit (18) and processed by the second processing unit (19);
wherein the central processing unit (8) controls the movement of the locomotion platform (4) along at least one horizontal, linear track (9) and along at least one passage adjacent to a horizontal, linear track (9), the movement of the feeding platform (6) along the lifting rod (14) and the feeding of the animal containment recipient (2) by the feed head (43) .

The present invention refers, in a second aspect, to an automated system for the controlled feeding of substances to animal containment recipients in an animal breeding facility, which includes at least one rack for animal containment recipients arranged in a line (1) comprising a plurality of animal containment recipients (2), wherein said recipients are arranged in the form of a grid on said rack, comprising:
an automated device for the controlled feeding of substances to animal containment recipients in an animal breeding facility, according to the first aspect of the invention; and
at least one horizontal, linear track (9), which is disposed on the ground and parallel to each rack for animal containment recipients arranged in a line (1), wherein a reflective strip (10) is disposed next to a terminal position of said horizontal, linear track (9).

The present invention refers, in a third aspect, to a method of controlled feeding of substances to animal containment recipients in an animal breeding facility, which includes at least one rack for animal containment recipients arranged in a line (1) comprising a plurality of animal containment recipients (2), wherein said recipients are arranged in the form of a grid on said rack, comprising the following steps:
i. an automated device, according to the first aspect of the invention, travelling alongside at least one rack for animal containment recipients arranged in a line (1);
ii. said automated device detecting a horizontal, linear track (9), which is disposed on the ground and parallel to each rack for animal containment recipients disposed in a line (1);
iii. said automated device moving along the horizontal, linear track (9) by means of a locomotion platform (4), comprised in said automated device, in order to position itself in front of the axis perpendicular to the ground, which passes by a certain animal containment recipient (2);
iv. a lifting mechanism (5) of said automated device adjusting the position of a feeding platform (6) along said axis perpendicular to the ground, which passes by a certain animal containment recipient (2), in order to position the feeding platform (6) at the height of a certain animal containment recipient (2);
v. A feeding platform (6) adjusting the position of a gear rack (17) along a plane parallel to the ground, in order for a feed head (43) to reach a substance feeding zone in a certain animal containment recipient (2);
vi. The automated device repeating the preceding steps until food is supplied to a predetermined set of animal containment recipients (2) disposed on the rack (1).

### SOLVING THE PROBLEM

The automated system for the controlled feeding of substances to animal containment recipients in an animal breeding installation of the present invention solves the problems of the state of the art, since the system is capable of feeding animals present in containment recipients arranged in various lines of racks for animal containment recipients. The solution comprises characteristics of an automated system that includes a robot (3) with capacity for travelling between various lines of racks (1) and which has a high degree of accuracy, in terms of the three Cartesian space coordinates, to feed the animals contained in the various animal containment recipients (2).

In order to install the robot (3) in a new animal breeding facility or in a pre-existing facility, the installation of a horizontal, linear track (9) is required, positioned before each one of the racks (1), preferably parallel to the racks (1).

### ADVANTAGEOUS EFFECTS OF THE INVENTION

The substantial difference of the device and of the system of the present invention in relation to the systems disclosed in US8499719B2, in CN105684979A, in CN205409160U, in WO2009072982A1 and in CN206150194U refers to the use of a system of linear tracks (9) and of a locomotion platform (4) with positioning identification sensors, which enables navigation along various lines of racks (1) containing recipients (2), namely tanks with fish by means of identifying a linear track and by means of sensors, such as line detection sensors and laser sensors. In a unique way, the system of the present invention is disconnected from the rack (1) with animal containment recipients (2). In fact, the unique system according to the present invention enables various lines of racks (1) to be covered, whereas the documents from the state of the art require the installation of an automatic feeding system for each one of the lines of racks (1).

The robot (3) is autonomous and comprises various sets of sensors, actuators and processing units that enable the supply of precise, automated feeding for a plurality of animal containment recipients, disposed in various lines of racks for animal containment recipients (1). The robot (3) may comprise at least one battery which gives it heightened operating autonomy and may also be capable of communicating with external infrastructures, in order to send and receive data related to the feeding activities of the animals bred in the animal breeding facility.

### BRIEF DESCRIPTION OF THE DRAWINGS

With the aim of promoting an understanding of the principles according to the embodiments of the present invention, reference will be drawn to the embodiments illustrated in figures and to the language used to describe them. In any case, it should be understood that there is no intention of limiting the scope of the present invention to the content of the drawings. Any subsequent alterations or modifications of the inventive characteristics illustrated herein, as well as any additional applications of the principles and embodiments of the invention illustrated, which would normally occur for a person skilled in the art being in possession of this specification, are considered within the scope of the invention claimed herein.
Figure 1 - perspective representation of an embodiment of the automated system according to the present invention;
Figure 2 - illustrates a processing system of a robot according to the invention;
Figure 3 - illustrates a set of sensors of a robot according to the invention;
Figure 4 - illustrates a perspective view of a robot according to the invention;
Figure 5 - illustrates a side view of the main components of the automated device according to the invention;
Figure 6 - illustrates a perspective view of a locomotion platform;
Figure 7 - illustrates a cutaway top view of a locomotion platform;
Figure 8 - illustrates another perspective view of a locomotion platform;
Figure 9 - illustrates a bottom view of a locomotion platform;
Figure 10 - illustrates a perspective view of the alignment of the robot with a horizontal, linear track;
Figure 11 - illustrates a top view of the locomotion of the robot with a horizontal, linear track;
Figure 12 - illustrates a front view of the feeding platform being moved by the lifting mechanism;
Figure 13 - illustrates a perspective view of a feeding platform;
Figure 14 - illustrates a side view of a feed head in movement to align with a food entrance orifice in an animal containment recipient and in movement to a rest position;
Figure 15 - illustrates a side view of the dry feeding circuit;

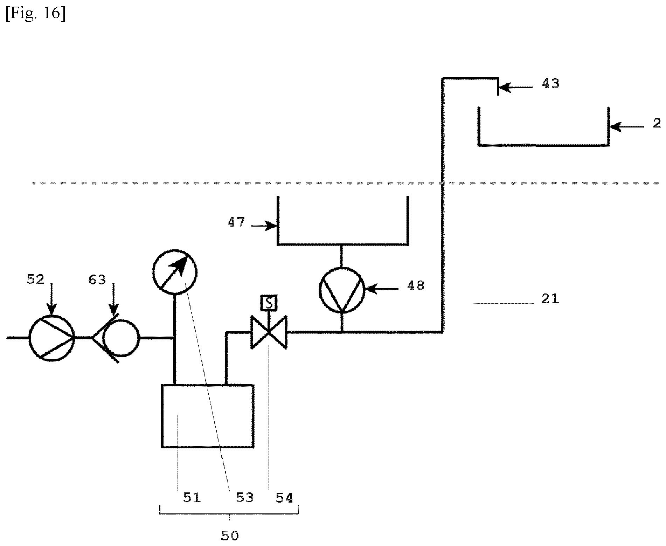

Figure 16 - illustrates a schematic diagram of the dry feeding circuit;
Figure 17 - illustrates a schematic diagram of the liquid feeding circuit.

### DESCRIPTION OF THE EMBODIMENTS

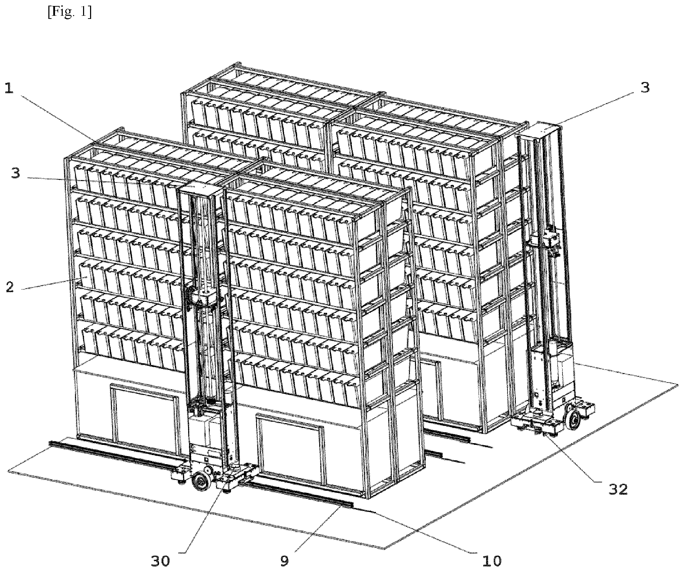

As illustrated in figure 1, an automated system for the controlled feeding of substances to animal containment recipients in an animal breeding facility according to the present invention presents a robot (3), which has the capacity for travelling between various lines of racks for animal containment recipients (1), and each rack (1) has a plurality of animal containment recipients (2), disposed for example in a grid arrangement of rows and columns. The robot (3) moves along the different lines of racks (1) along a horizontal, linear track (9), which is disposed before each rack (1). In order to identify the horizontal, linear track (9) accurately, as the robot travels between the different lines of racks (1), various navigation sensors are installed on the robot, for example laser scanning sensors (30) and optical sensors for following a reflective strip (32), and a reflective strip (10) is disposed alongside the horizontal, linear track (9), in order for the sensorial navigation unit (13) of the robotic device to easily identify said horizontal, linear track (9).

Preferably, the robot (3) will operate on a flat ground or floor, wherein the mobility is performed by means of drive wheels (11). Therefore, the locomotion of the robot (3) may be non-holonomic, for example by means of two, four or six drive wheels (11). Alternatively, the locomotion of the robot (3) may be holonomic, for example using a set of omnidirectional wheels (11), only at ground level.

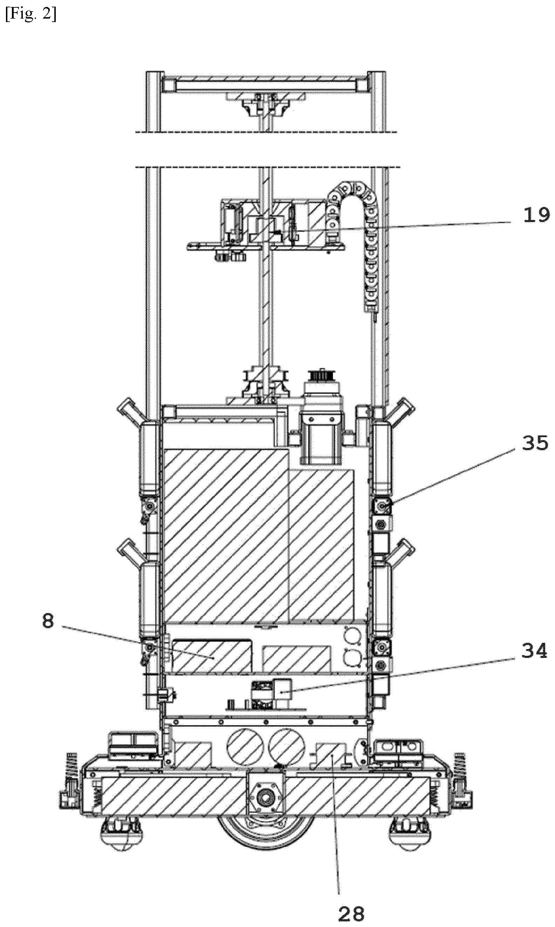

In the preferred embodiments of the invention, as illustrated in figure 2, the processing system of the robot (3) comprises a central processing unit (8), which can communicate with various controllers and processors. Illustratively, the central processing unit (8) can communicate with a motor command unit (28), in order to give it instructions to activate or deactivate the first motorization unit (12), disposed on the locomotion platform (4). The central processing unit (8) may also communicate with an energy management controller (34), in order to manage the energy available in the set of batteries of the robot (3). Additionally, the central processing unit (8) may also communicate with a controller of the feeding circuit (35) and with a controller of the feed head, whose elements respectively controlled will be detailed further ahead.

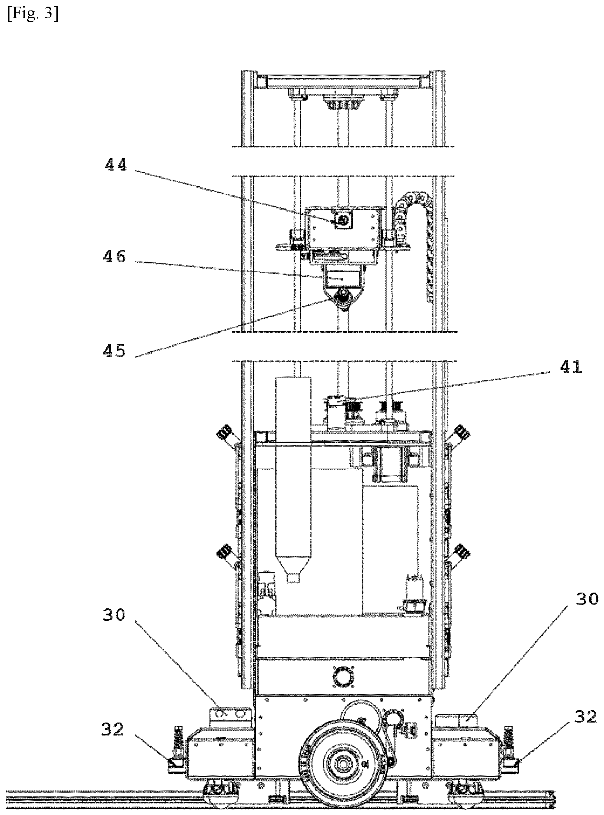

The robot (3) has a set of sensors that enable the precise fulfillment of their functionalities related to the automated feeding of the plurality of recipients (2) arranged on the various racks (1) in a line. As illustrated in figure 3, the locomotion platform (4) has a sensorial navigation unit (13), which presents a set of sensors, for example laser scanning sensors (30), incremental rotary encoder sensors (31), optical sensors for following a reflective strip (32) and an inertial measurement unit (33), which enable the precise identification of the start of a horizontal, linear track (9), as well as the precise navigation alongside. Additionally, the feeding platform (6) has a digital image capture sensor (44), namely a digital camera, which can gather information related to the quantity and the type of animals in each one of the containment recipients (2). The feeding platform (6) also has a distance measurement sensor (45), which enables the precise approximation of the feed head (43) to the substance feeding zone in an animal containment recipient (2). The feeding platform (6) also has a bar code reading sensor (46), which can identify specific feeding parameters on a bar code label fixed on the containment recipients (2).

In the other embodiment according to the invention, the horizontal, linear track (9) can be part of the structure of a rack for animal containment recipients disposed in a line (1), being connected to the base of said rack (1) next to the ground and parallel to said rack (1).

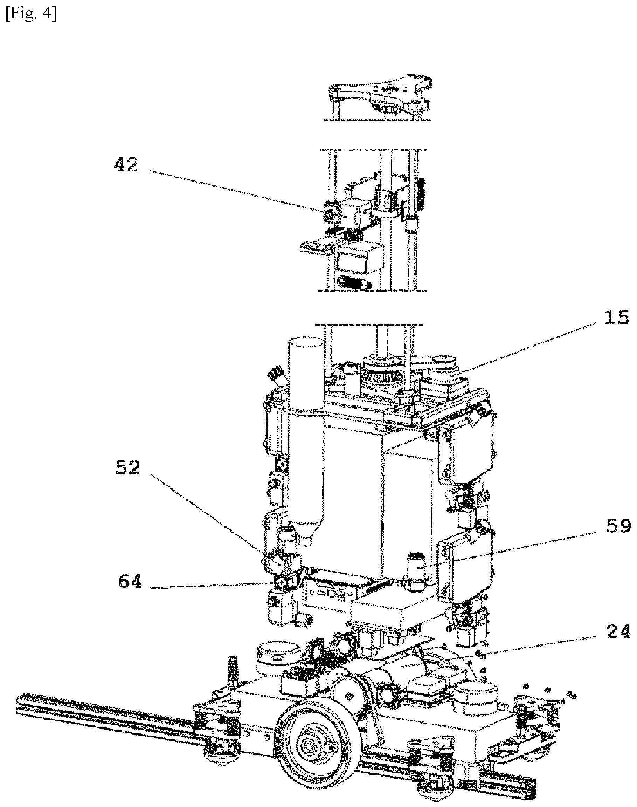

As illustrated in figure 4, the locomotion platform (4) of the robot (3) has a first motorization unit, which includes a motor (24). In this embodiment, some elements that are part of the feeding circuit are connected to the locomotion platform (4), namely the compressed air compressor (52), which is used during the course of the transfer of dry foods to the recipients (2) with animals, and the first liquid circulation pump (59), which is used during the course of the transfer of liquid foods to the recipients (2) with animals. Figure 4 also presents a step motor for dosing dry food (64); a motor of the lifting mechanism (15) and a motor of the feeding platform (42), the last three being used to carry out fine adjustment movements of each one of the respective elements of the robot. In the preferred embodiments of the invention, the motor of the lifting mechanism (15) is a step motor.

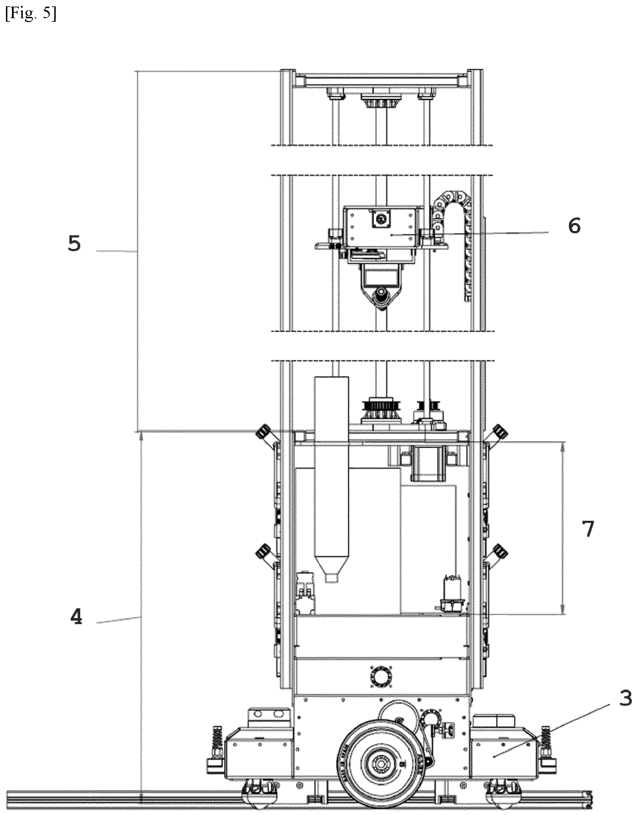

As illustrated in figure 5, the automated device for the controlled feeding of substances to animal containment recipients in an animal breeding facility includes a robot (3), that comprises a locomotion platform (4); a lifting mechanism (5); a feeding platform (6); and a feeding circuit (7). The locomotion platform (4) provides the control and the holonomic and non-holonomic movement of the robot and includes batteries, motors, motor command units, sensors. Preferably, the central processing unit (8) may be included in the locomotion platform (4). In the preferred embodiments, the feeding circuit is connected to the locomotion platform (4), and this also supports the lifting mechanism (5). The lifting mechanism (5) enables the feed head to be lifted to a certain height, in order for a certain animal containment recipient (2) in the rack (1) to be achieved. The feeding platform (6) includes the sensors and actuators necessary to detect a substance feeding zone in an animal containment recipient (2), namely an orifice in said recipient (2), besides adjusting the position of the feed head (43) to the required position. The feeding circuit is configured to supply dry and/or liquid foods to a given recipient (2).

Subsequent subsections will set out further details on each one of the components of the automated device for the controlled feeding of substances to animal containment recipients in an animal breeding facility of the invention.

### Locomotion Platform

The locomotion of the automated device according to the invention is based on a robot (3) with drive wheels (11), especially configured to move on flat surfaces.

In the preferred embodiments of the invention, the locomotion platform (4) comprises at least two drive wheels (11) and at least four casters (23), two casters (23) being disposed in a front position in relation to said drive wheels (11) and two casters (23) disposed in a rear position in relation to said drive wheels (11).

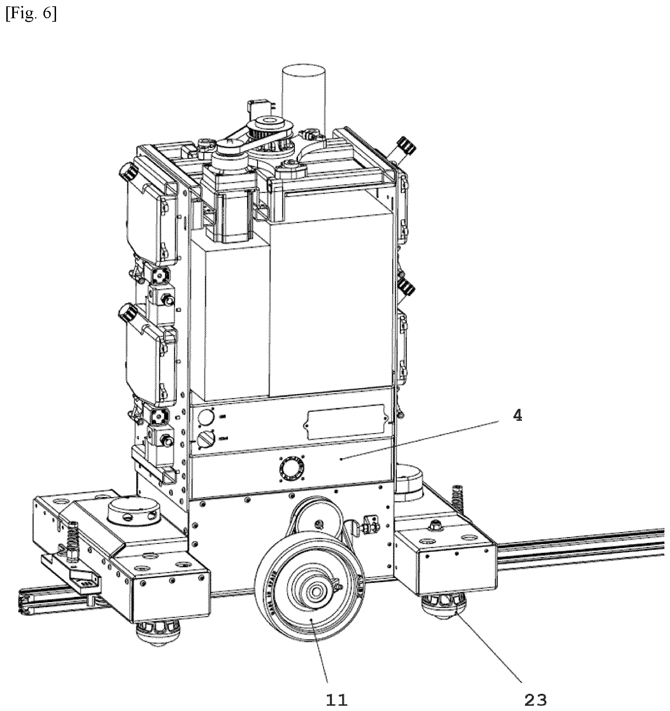

As illustrated in figure 6, in one of the embodiments of the present invention, the locomotion platform (4) has two drive wheels (11) disposed in a central position on the base of the chassis of the locomotion platform (4) and four casters (23), such that the movement of said locomotion platform (4) is non-holonomic and uses the configuration with differential command. In this embodiment, two casters (23) are disposed in a front position of the locomotion platform (4) and two casters (23) are disposed in a rear position of the locomotion platform (4). Each one of the casters (23) is preferably installed with springs, wherein this set helps the stabilization of the robot (3) during the course of its locomotion or in adapting to irregular floors, preventing the loss of contact of the drive wheels (11).

In one of the embodiments of the present invention, the first motorization unit (12) comprises at least one motor (24) and a gearbox (25), wherein the power is transferred to the drive wheels (11) by means of at least one pulley (26) and a transmission belt (27).

Preferably, the sensorial navigation unit (13) comprises one or more sensors selected from the group consisting of a laser scanning sensor (30), an incremental rotary encoder sensor (31), an optical sensor for following a reflective strip (32) and an inertial measurement unit (33), configured to collect data related with the position, the orientation and the speed of the locomotion platform (4).

In other embodiments of the invention, the horizontal, linear track (9) comprises a plurality of markers (36), disposed along the length of said linear track, which are selected from the group comprised of markers detectable by optical sensors or by magnetic sensors.

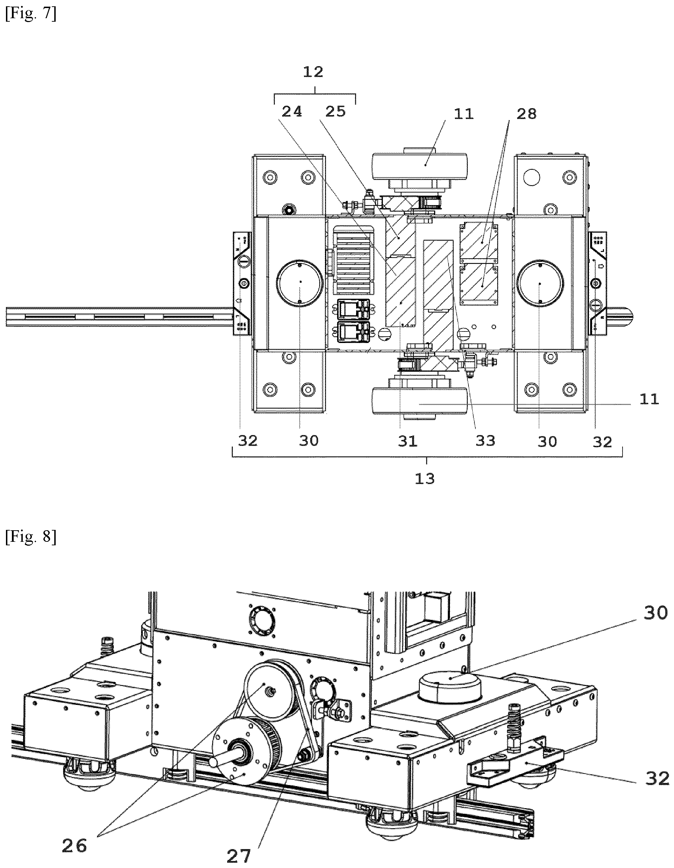

In one embodiment of the locomotion platform (4), as illustrated in figures 7 and 8, the first motorization unit (12) comprises two motors (24), which are connected to a gearbox (25), which operates by gearings and incremental rotary encoder sensors (31). The transfer of driving force to the drive wheels (11) is carried out by means of at least one pair of pulleys (26) and a transmission belt (27). The central processing unit (8) sends speed and position commands to the motor command units (28) in order to actuate the motors (24).

The locomotion platform (2) charges batteries that provide energy to the motors and electric and electronic components of the robot (3). Preferably, the locomotion platform (2) also comprises the central processing unit (8), which receives the data collected by the various auxiliary processing units, motor command units (28) and sensors in order to calculate the route of locomotion, generate trajectories and speeds for each one of the drive wheels (11), adjust the feeding platform (6) to the level of the animal containment recipients (2) and proceed to feeding using dry or liquid feeds.

In the preferred embodiments of the present invention, an electric charging station of the battery or of the batteries of the robot (3) is installed in the proximity of the animal breeding installation.

In the preferred embodiments according to the invention, the locomotion platform (4) comprises at its base at least one roller slider for the linear track (29), configured to align with the horizontal, linear track (9).

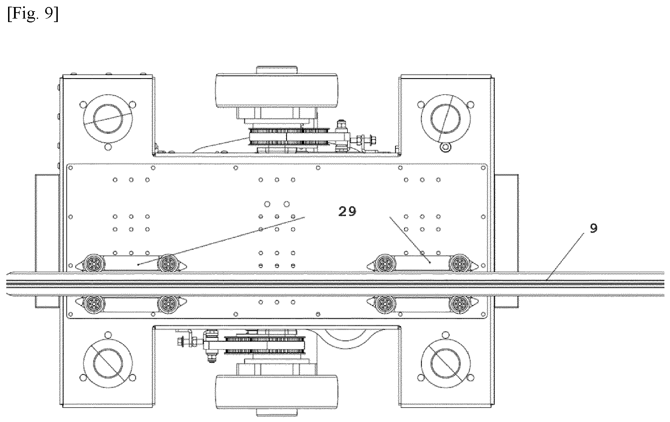

As illustrated in figure 9, preferably the locomotion platform has at its base two roller sliders for the linear track (29), one of these components being disposed in a position upstream of the drive wheels (11) and the other component disposed downstream of said drive wheels (11). The roller sliders for the linear track (29) help the locomotion platform (4) to adjust to the horizontal, linear track (9), which is installed on the ground and parallel to a certain rack (1) for animal containment recipients disposed in a line.

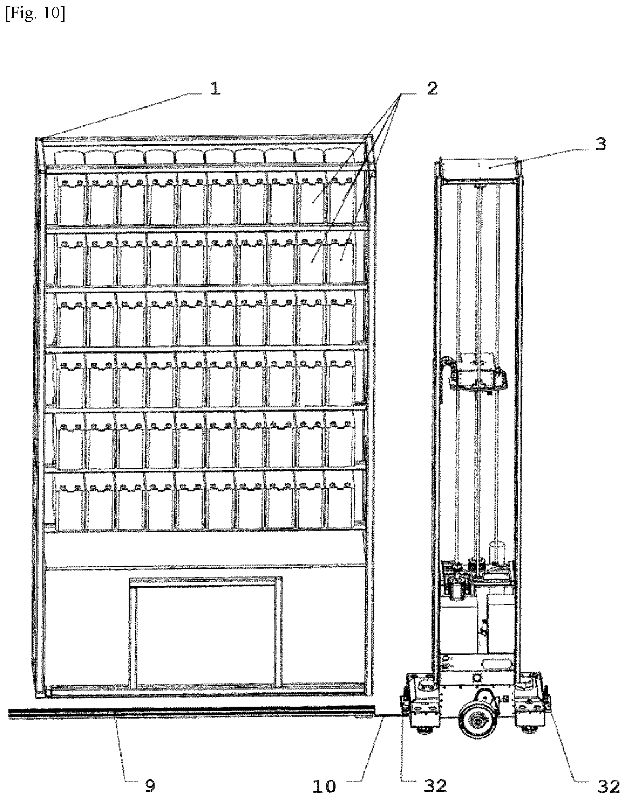

The robot (3) uses the sensorial navigation unit (13), namely the laser and odometry sensors to navigate outside of the horizontal, linear track (9) between two lines of racks or from or to the battery charger. As illustrated in figure 10, the robot (3) makes its approximation to the horizontal, linear track (9) by means of the optical sensors for following the reflective strip (32), in order to identify the reflective strip (10) and, consequently align itself with a certain rack for animal containment recipients disposed in a line (1). The alignment is performed automatically, bearing in mind the parallelism between the rack (1) and the horizontal, linear track (9).

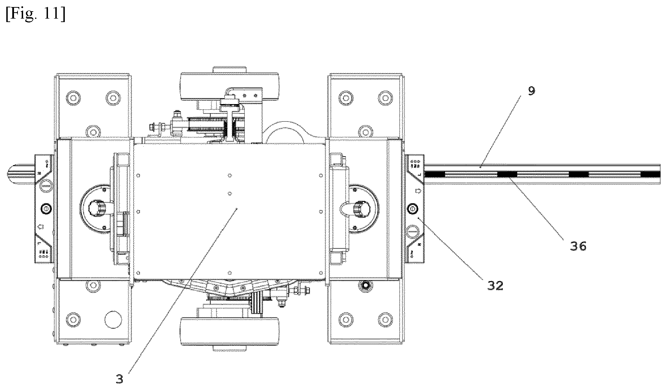

Figure 11 illustrates the locomotion of the robot (3) along the horizontal, linear track (9), and after entry onto said track, the robot (3) can no longer make rotational movements, but only movements along said track, that is, along a Cartesian axis x, wherein the movements are forward and backward. In this embodiment, the horizontal, linear track (9) comprises a plurality of markers (36), which act as calibration marks, since they are detectable by the optical sensors for following the reflective strip (32), in order for any corrections of position of the locomotion platform (4) that need to be made.

### Lifting mechanism

A locomotion platform (4) is used to make the movement of the rack feeding platform (6) on a horizontal plane, parallel to the ground, while the lifting mechanism (5) provides the movement of the feeding platform (6) along a Cartesian vertical z-axis, which is perpendicular to the ground.

In one of the embodiments of the present invention, the lifting mechanism (5) comprises at least one motor of the lifting mechanism (15), wherein the driving force is transferred to the feeding platform (6) by means of at least one pulley (38) and a transmission belt (39), wherein the lifting rod (14) is a spindle structure, configured to convert the angular rotation into linear movement.

The lifting mechanism (5) comprises a lifting rod (14), which is perpendicular to the horizontal, linear track (9); and a second motorization unit (16), which is configured to move the feeding platform (6) along the lifting rod (14); and the lifting mechanism (5) is connected to the locomotion platform (4). In the preferred embodiments, the second motorization unit (16) comprises a motor of the lifting mechanism (15), a pair of pulleys (38) and a transmission belt (39), wherein the pair of pulleys (38) enables the motor of the lifting mechanism (15) to be connected to the lifting rod (14).

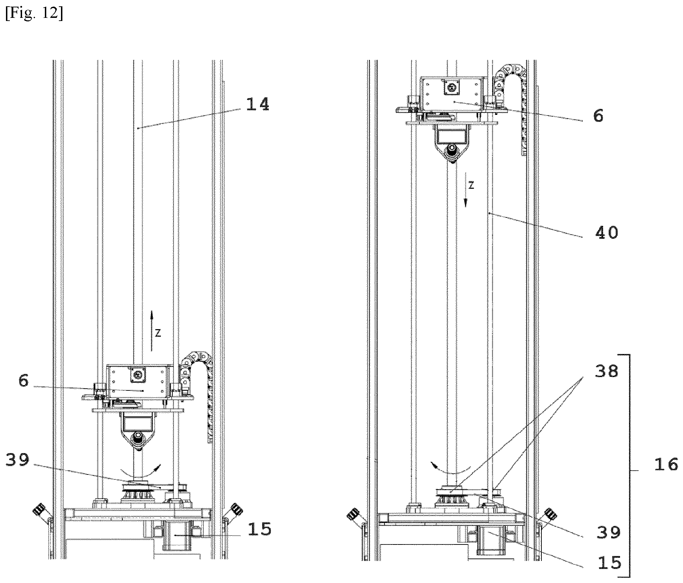

One embodiment of lifting mechanism (5) is shown in figure 12, wherein the lifting mechanism (5) is mounted on the top of the locomotion platform (4). The lifting mechanism (5) presents a lifting rod (14), namely a spindle axis, which converts angular movement into linear movement, when there is the actuation of a motor of the lifting mechanism (15). For this movement conversion to occur, the motor of the lifting mechanism (15) is connected to the lifting rod (14) by means of a pair of pulleys (38) and a transmission belt (39). In this illustrated embodiment, an anti-clockwise movement of the motor axis of the lifting mechanism (15) leads the feeding platform (6) to rise along the lifting rod (14), while a clockwise movement of the motor axis of the lifting mechanism (15) leads the feeding platform (6) to descend along the lifting rod (14). In this embodiment three stabilization rods of the lifting mechanism (40) are also used, which are also installed to align and stabilize the movement of the feeding platform (6).

The motor of the lifting mechanism (15) can be powered by a motor control board, which controls the speed and the position of the motor. The central processing unit (8) can be configured to communicate with the motor control board, in order to send the requested control instructions and receive information and data on the current phase and the position of the motor. Preferably, a calibration sensor of the lifting mechanism (41) can be used in the lifting mechanism (5), in order to perform the calibration of the real position of the feeding platform (6).

### Feeding platform

The feeding platform (6) comprises the sensors needed to adjust the feed head (43) to the substance feeding zone in an animal containment recipient (2), for example an orifice disposed in a tank or aquarium with fish.

In the preferred embodiments of the invention, the third motorization unit (20) of the feeding platform (6) comprises a gear rack (17) and at least one motor (42) to move the gear rack (17) along a horizontal axis, which is perpendicular to the lifting rod (14), for the feed head (43) to reach the substance feeding zone in an animal containment recipient (2).

Preferably, the sensorial feeding unit (18) comprises a digital image capture sensor (44), configured to detect patterns in the rack (1) for animal containment recipients (2). Additionally, the sensorial feeding unit (18) comprises a distance measurement sensor (45), configured to measure the distance between the feed head (43) and the substance feeding zone in the animal containment recipient (2). Additionally, the sensorial feeding unit (18) comprises a bar code reading sensor (46), configured to read feeding parameters related to a certain animal containment recipient (2).

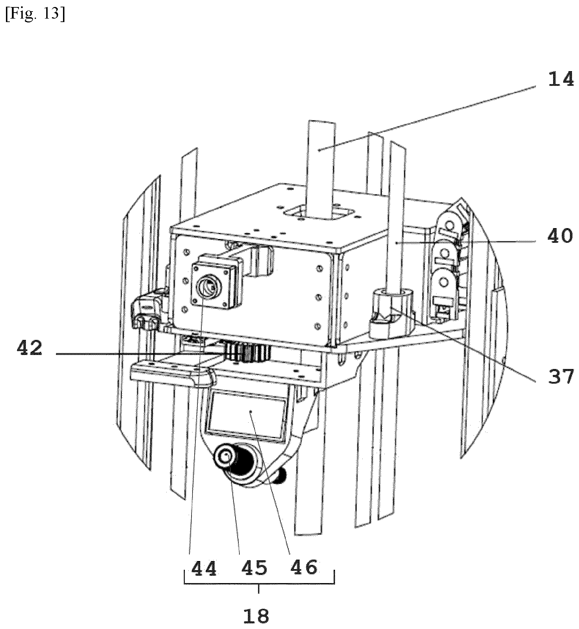

The feeding platform (6) comprises a sensorial feeding unit (18), a second processing unit (19), a third motorization unit (20), which includes a gear rack (17) and a motor (42) and a motor control board. As illustrated in figure 13, the sensorial feeding unit (18) includes a digital image capture sensor (44), namely a digital camera, a distance measurement sensor (45), and a bar code reading sensor (46), which has information and specific feeding parameters for a certain recipient (2). As a person skilled in the art will fully understand, any bar code label may be used in the scope of the invention, namely a one-dimensional or two-dimensional bar code, for example a QR-code.

The second processing unit (19) may have ongoing communication with the central processing unit (8), in order to gather and transmit data from the sensorial feeding unit (18) to the central processing unit (8), and in order to receive from said unit (8) commands that are relayed to the feed head (43).

In the preferred embodiments of the invention, the digital image capture sensor (44), namely a digital camera, can be used to detect patterns in the animal containment recipients (2) and in the racks (1). The data distance capture sensor that enables an evaluation of the distance of the feed head (43) in relation to an animal containment recipient (2). The bar code reading sensor (46) can capture information related with the number of fish of a certain recipient (2), besides the feed type and amount defined for a certain recipient (2).

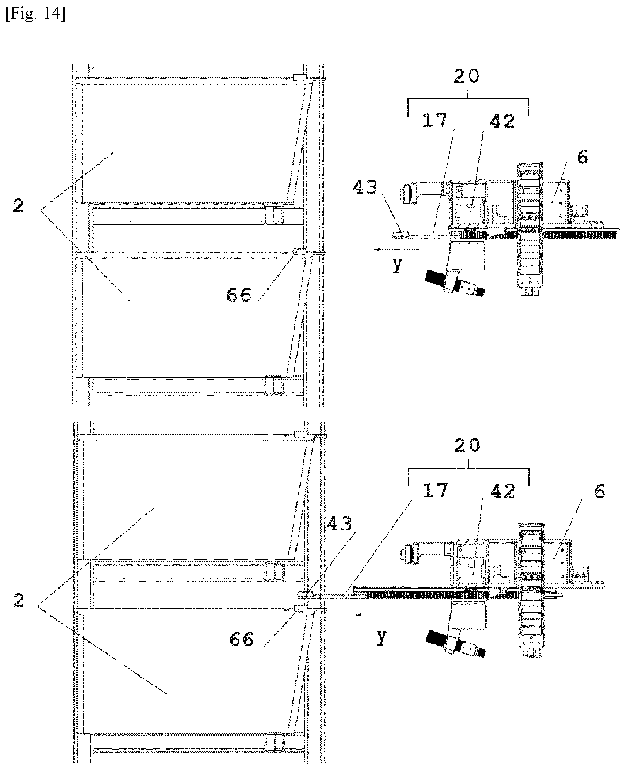

As illustrated in figure 14, the central processing unit (8) uses the data sent by the second processing unit (19) of the feeding platform (6) to compute the real position of a recipient (2), for example a tank, and adjust the position on the Cartesian x axis of the locomotion platform (4) along the horizontal, linear track (9) and also adjust the position of the feeding platform (6) on the Cartesian z axis. The second processing unit (19) of the feeding platform (6) transmits instructions for the motor of the feeding platform (42) to move the gear rack (17) forwards and backwards along the Cartesian y axis of the robot (3), such that a food entrance orifice (66) disposed in the recipient (2) is reached.

### Feeding circuit

In the preferred embodiments according to the invention, the robot (3) is configured to feed animal containment recipients (2), namely tanks or aquariums with fish, arranged on a rack (1), wherein the recipients (2) are stacked on said rack (1), for example in a grid arrangement of rows and columns. The feeding circuit of the automated device for the controlled feeding of substances to animal containment recipients in an animal breeding facility is configured to supply feeds and nutrients in liquid and/or solid form.

The dry feeding circuit (21) is configured to operate particularly with granulated substances, for example with feedstuffs for fish in granulated form. As a person skilled in the art will fully perceive, the type of substance to be fed and its physical form, for example the size of the particles, will depend on the type, size and specimens present in the recipient (2).

The liquid feeding circuit (22) is configured to operate particularly with substances that are solubilized or in suspension in a given liquid medium, for example a suspension of live organisms, namely incubated *artemia* and *daphnia.*

The dry feeding circuit (21) may present various capacities for housing dry feeds, and may include one or more reservoirs of dry feed substances (47) containing the same type of feeds, in cases where all the recipients (2) of the rack (1) are fed with the same type of feed. Alternatively, the dry feeding circuit (21) may comprise reservoirs of dry feed substances (47) with different types of feeds. In the preferred embodiments of the invention, the reservoirs of dry feed substances (47) are installed on the locomotion platform (4). The reservoirs of dry feed substances (47) may be hand-supplied by means of an opening disposed on the top of each reservoir (47).

In the preferred embodiments according to the invention, the dry feeding circuit (21) of the feeding circuit (7) comprises a reservoir of dry feed substances (47); a motor (48), configured to move a portion of dry feed substance to a dry substance trigger chamber (49); and a compressed air circuit (50), configured to direct said portion of dry food substance from the dry substance trigger chamber (49) to the feed head (43).

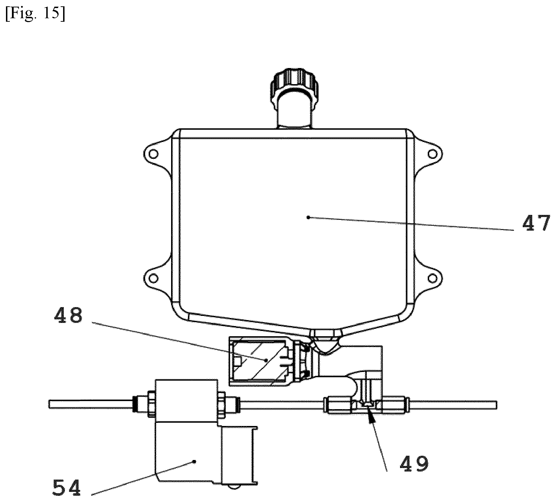

Figure 15 presents an embodiment of dry feeding circuit (21) with a reservoir of dry feed substances (47), and at the bottom of each reservoir (47) a motor (48) is installed, configured to deliver the predetermined amount of feed to a dry substance trigger chamber (49). The amount of feed is a multiple of a previously defined value, and may vary depending on the amount, age and number of specimens, for example fish, present in the reservoir (2). This set of feeding parameters may be made available and considered by means of a bar code label, which is read by the bar code reading sensor (46). A feed which is directed to the dry substance trigger chamber (49) is impelled to a tube of the feed head (43), by means of a compressed air circuit (50), being projected through the feed entrance orifice (66) disposed in the recipient (2).

In the preferred embodiments of the invention, the compressed air circuit (50) comprises a compressed air tank (51); a pressure sensor (53), disposed upstream of said tank (51); and a pneumatic valve (54), configured to release the compressed air to the dry substance trigger chamber (49). Even more preferably, the compressed air tank (51) is pressurized by means of a compressed air compressor (52). The pressure sensor (53) is used to measure and regulate the pressure of the compressed air circuit (50). A non-return valve (63) may be used to prevent the compressed air from returning from the compressed air tank (51) to the compressed air compressor (52), when the latter is switched off. Therefore, the compressed air tank (51) stores compressed air, which enables the feed housed in the dry substance trigger chamber (49) to be propelled to the feed head (43), when the pneumatic valve (54) is activated, that is, opened.

The dry feeding circuit (21) is controlled by a controller of the feeding circuit (7), which manages the pressure in the compressed air circuit (50) and controls the quantity of feed removed from each reservoir (47), besides activating or deactivating the pneumatic valve (54), in order to direct the desired quantity of feed to the feed head (43) .

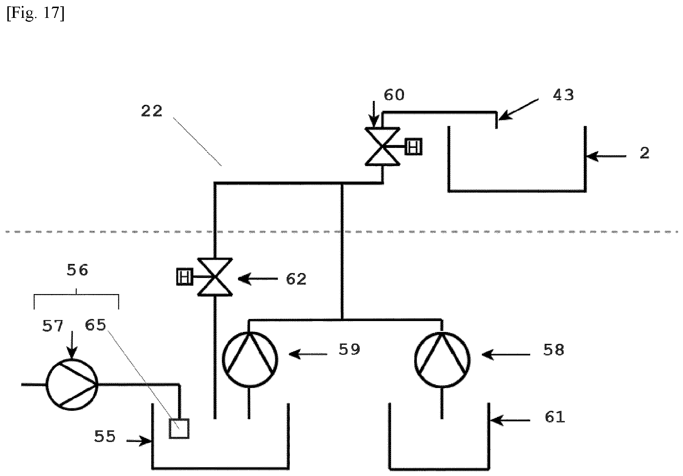

In the preferred embodiments according to the invention, as illustrated in figure 17, the liquid feeding circuit (22) of the feeding circuit (7) comprises a reservoir of liquid feed substances (55); a first liquid circulation pump (59) downstream of the reservoir of liquid feed substances (55); a first hydraulic valve (60) downstream of the first liquid circulation pump (59) and upstream of the feed head (43); and a second hydraulic valve (62), parallel to the first hydraulic valve (60) and upstream of the reservoir of liquid feed substances (55); and during the course of the liquid feeding to an animal containment recipient (2), the first hydraulic valve (60) is in an open position and the second hydraulic valve (62) is in a closed position, wherein the feed liquid pumped by the first liquid circulation pump (59) flows from the reservoir of liquid feed substances (55) to the feed head (43).

Even more preferably, the liquid feeding circuit (22) of the feeding circuit (7) comprises a reservoir of cleaning liquid (61); a second liquid displacement pump (58) downstream of the reservoir of cleaning liquid (61) and upstream of the first hydraulic valve (60); and during the course of the cleaning of the liquid feeding circuit, the hydraulic valves (60,62) are opened and closed alternately, such that the cleaning liquid pumped by the second liquid circulation pump (58) cleans the entire piping of the liquid feeding circuit (22).

Even more preferably, as illustrated in figure 17, the liquid feeding circuit (22) of the feeding circuit (7) comprises a homogenization system of the reservoir of liquid feed substances (56), for example an air pump (57) and an air diffuser (65). The homogenization is relevant for cases where the liquid feeding is a suspension of feeds instead of a homogenous solution of feeds, as is the case of dispersions with live organisms used as feed sources. In these embodiments, the use of the air pump (57) is particularly preferred, as it helps to maintain the vital conditions of said organisms.

As a person skilled in the art will understand, the device and the system according to the invention may be used to provide automated feeding to various types of animals housed in recipients (2), namely fish used as model organisms in scientific studies, for example the species *Danio rerio.* However, the present invention may be used in the breeding of other specimens used for experiment purposes, as per the non-limitative example: *Danionella translucida, Devario aequipinnatus, Nothobranchius furzeri, Oryzias latipes* and even *Xenopus spp.* Further, the present invention may also be used with the same functionalities in the breeding of other specimens, including those destined for breeding with feed purposes, selection of specimens and aquariophilia in general.

As used during the course of this patent application, the term "or" is used in the inclusive sense instead of the exclusive sense, unless the exclusive sense is clearly defined in a specific situation. In this context, a phrase such as "X uses A or B" should be interpreted as including all the pertinent inclusive combinations, for example "X uses A", "X uses B" and "X uses A and B".

As used during the course of this patent application, the indefinite articles "a" or "an" should be interpreted generally as "one or more", unless the sense of an embodiment singular is clearly defined in a specific situation.

As presented in this specification, the terms related with examples should be interpreted with the purpose of illustrating an example of something and not indicative as a preference.

As used in this specification, the expression "about" and "approximately" refers to a range of values of more or less 10% the specified number.

As used in this specification, the expression "substantially" means that the real value is within the range of about 10% of the related desired, variable or limit value, particularly within about 5% of the related desired, variable or limit value or especially within about 1% of the related desired, variable or limit value.

The subject matter-object described above is provided as an illustration of the present invention and should not be interpreted in a way that limits it. The terminology used with the purpose of describing specific embodiments, according to the present invention, should not be interpreted in a way that limits the invention. As used in the specification, the definite and indefinite articles, in their singular form, should be interpreted as inclusive of their plural forms as well, unless the context of the specification explicitly states otherwise. It shall be understood that the terms "comprise" and "include", when used in this specification, specify the presence of the characteristics, of the elements, of the components, of the stages and of the related operations, but do not exclude the possibility that other characteristics, elements, components, stages and operations are also encompassed therein.

All the alterations, provided that they do not modify the essential characteristics of the accompanying claims, should be considered within the scope of protection of the present invention.

### LIST OF REFERENCE INDICATIONS

- 1.: A rack for animal containment recipients arranged in a line
- 2.: An animal containment recipient
- 3.: A robot
- 4.: A locomotion platform
- 5.: A lifting mechanism
- 6.: A feeding platform
- 7.: A feeding circuit
- 8.: A central processing unit
- 9.: A horizontal, linear track
- 10.: A reflective strip
- 11.: A drive wheel
- 12.: A first motorization unit
- 13.: A sensorial navigation unit
- 14.: A lifting rod
- 15.: A motor of the lifting mechanism
- 16.: A second motorization unit
- 17.: A gear rack
- 18.: A sensorial feeding unit
- 19.: A second processing unit
- 20.: A third motorization unit
- 21.: A dry feeding circuit
- 22.: A liquid feeding circuit
- 23.: A caster
- 24.: A motor of the locomotion platform
- 25.: A gearbox of the locomotion platform
- 26.: A pulley of the locomotion platform
- 27.: A transmission belt of the locomotion platform
- 28.: A motor command unit
- 29.: A roller slider for the linear track
- 30.: A laser scanning sensor
- 31.: An incremental rotary encoder sensor
- 32.: An optical sensor for following a reflective strip
- 33.: An inertial measurement unit (combination of accelerometer and gyroscope)
- 34.: An energy management controller
- 35.: A controller of the feeding circuit
- 36.: A marker of the horizontal, linear track
- 37.: A linear bearing
- 38.: A pulley of the lifting mechanism
- 39.: A transmission belt of the lifting mechanism
- 40.: A stabilization rod of the lifting mechanism
- 41.: A calibration sensor of the lifting mechanism
- 42.: A motor of the feeding platform
- 43.: A feed head
- 44.: A digital image capture sensor
- 45.: A distance measurement sensor
- 46.: A bar code reading sensor
- 47.: A reservoir of dry food substances
- 48.: A motor of the dry feeding circuit
- 49.: A dry substance trigger chamber
- 50.: A compressed air circuit
- 51.: A compressed air tank
- 52.: A compressed air compressor
- 53.: A pressure sensor
- 54.: A pneumatic valve
- 55.: A reservoir of liquid feed substances
- 56.: A homogenization system of the reservoir of liquid feed substances
- 57.: An air pump
- 58.: A second liquid circulation pump
- 59.: A first liquid circulation pump
- 60.: A first hydraulic valve
- 61.: A reservoir of cleaning liquid
- 62.: A second hydraulic valve
- 63.: A non-return valve
- 64.: A step motor for dosing dry food
- 65.: An air diffuser
- 66.: A feed entrance orifice

### LIST OF CITATIONS

The list of citations is as follows:

### LITERATURE ON PATENTS

US8499719B2, by Marco Brocca and Giovanni Frangelli and published on August 6, 2013;
CN105684979A, by Zhang Qiong and published on June 22, 2016; WO2009072982A1, by Lau Lionel et al. and published on June 11, 2009.

## Claims

1. An automated device for the controlled feeding of substances to animal containment recipients in an animal breeding facility, which includes at least one rack for animal containment recipients arranged in a line (1) comprising a plurality of animal containment recipients (2), wherein said recipients are arranged in the form of a grid on said rack, comprising:
a robot (3), comprising a locomotion platform (4); a lifting mechanism (5); a feeding platform (6); a feeding circuit (7); and a central processing unit (8);
wherein the robot (3) is configured to travel on at least one horizontal, linear track (9), which is disposed parallel to each rack for animal containment recipients disposed in a line (1), wherein a reflective strip (10) is disposed next to a terminal position of said horizontal, linear track (9);
wherein the locomotion platform (4) comprises at least one drive wheel (11); a first motorization unit (12) and a sensorial navigation unit (13); the sensorial navigation unit (13) being configured to locate and navigate the platform in the workspace and to detect the reflective strip (10) and the first motorization unit (12) configured to move the locomotion platform (4) along the horizontal, linear track (9);
wherein the lifting mechanism (5) comprises a lifting rod (14), which is perpendicular to the horizontal, linear track (9); and a second motorization unit (16), which is configured to move the feeding platform (6) along the lifting rod (14); and the lifting mechanism (5) is connected to the locomotion platform (4);
wherein the feeding platform (6) comprises a gear rack (17), which is connected to a feed head (43); a sensorial feeding unit (18), which is configured to send data to the central processing unit (8) regarding the position of the feed head (43) in relation to the feeding zone of the animal containment recipient (2); a second processing unit (19); a third motorization unit (20), which is configured to move the gear rack (17) along a horizontal axis, which is perpendicular to the lifting rod (14), for the feed head (43) to reach the substance feeding zone in an animal containment recipient (2);
wherein the feeding circuit (7) comprises one or more feeding circuits selected from the group consisting of a dry feeding circuit (21) and a liquid feeding circuit (22);
wherein the central processing unit (8) receives data regarding position, orientation and speed relating to the locomotion platform (4), said data being collected by the sensorial navigation unit (13) and processed by the central processing unit (8);
wherein the central processing unit (8) receives data regarding feeding parameters for each animal containment recipient (2), said data being collected by the sensorial feeding unit (18) and processed by the second processing unit (19);
wherein the central processing unit (8) controls the movement of the locomotion platform (4) along at least one horizontal, linear track (9) and along at least one passage adjacent to a horizontal, linear track (9), the movement of the feeding platform (6) along the lifting rod (14) and the feeding of the animal containment recipients (2) by the feed head (43).

2. The automated device for the controlled feeding of substances to animal containment recipients in an animal breeding facility, according to the preceding claim, **characterized in that** the locomotion platform (4) comprises at least two drive wheels (11) and at least four casters (23), two casters (23) being disposed in a front position in relation to said drive wheels (11) and two casters (23) disposed in a rear position in relation to said drive wheels (11).

3. The automated device for the controlled feeding of substances to animal containment recipients in an animal breeding facility, according to the preceding claim, **characterized in that** the locomotion platform (4) comprises at its base at least one roller slider for the linear track (29), configured to align with the horizontal, linear track (9).

4. The automated device for the controlled feeding of substances to animal containment recipients in an animal breeding facility, according to any one of the preceding claims, **characterized in that** the first motorization unit (12) comprises at least one motor (24) and a gearbox (25), wherein the power is transferred to the drive wheels (11) by means of at least one pulley (26) and a transmission belt (27).

5. The automated device for the controlled feeding of substances to animal containment recipients in an animal breeding facility, according to any one of the preceding claims, **characterized in that** the sensorial navigation unit (13) comprises one or more sensors selected from the group consisting of a laser scanning sensor (30), an incremental rotary encoder sensor (31), an optical sensor for following a reflective strip (32) and an inertial measurement unit (33), configured to collect data related to the position, to the orientation and to the speed of the locomotion platform (4).

6. The automated device for the controlled feeding of substances to animal containment recipients in an animal breeding facility, according to any one of the preceding claims, **characterized in that** the horizontal, linear track (9) comprises a plurality of markers (36), disposed along the length of said linear track, which are selected from the group comprised of markers detectable by optical sensors or by magnetic sensors.

7. The automated device for the controlled feeding of substances to animal containment recipients in an animal breeding facility, according to any one of the preceding claims, **characterized in that** the lifting mechanism (5) comprises at least one motor of the lifting mechanism (15), wherein the driving force is transferred to the feeding platform (6) by means of at least one pulley (38) and a transmission belt (39), wherein the lifting rod (14) is a spindle structure, configured to convert the angular rotation into linear movement.

8. The automated device for the controlled feeding of substances to animal containment recipients in an animal breeding facility, according to any one of the preceding claims, **characterized in that** the third motorization unit (20) of the feeding platform (7) comprises at least one motor (42) to move the gear rack (17) along a horizontal axis, which is perpendicular to the lifting rod (14), for the feed head (43) to reach the substance feeding zone in an animal containment recipient (2).

9. The automated device for the controlled feeding of substances to animal containment recipients in an animal breeding facility, according to any one of the preceding claims, **characterized in that** the sensorial feeding unit (18) comprises a digital image capture sensor (44), configured to detect patterns in the rack (1) for animal containment recipients (2).

10. The automated device for the controlled feeding of substances to animal containment recipients in an animal breeding installation, according to any one of the preceding claims, **characterized in that** the sensorial feeding unit (18) comprises a distance measurement sensor (45), configured to measure the distance between the feed head (43) and the substance feeding zone in an animal containment recipient (2).

11. The automated device for the controlled feeding of substances to animal containment recipients in an animal breeding facility, according to any one of the preceding claims, **characterized in that** the sensorial feeding unit (18) comprises a bar code reading sensor (46), configured to read feeding parameters related to a certain animal containment recipient (2).

12. The automated device for the controlled feeding of substances to animal containment recipients in an animal breeding facility, according to any one of the preceding claims, **characterized in that** the dry feeding circuit (21) of the feeding circuit (7) comprises a reservoir of dry food substances (47); a motor (48), configured to move a portion of dry feed substance to a dry substance trigger chamber (49); and a compressed air circuit (50), configured to propel said portion of dry feed substance from the dry substance trigger chamber (49) to the feed head (43).

13. The automated device for the controlled feeding of substances to animal containment recipients in an animal breeding facility, according to the preceding claim, **characterized in that** the compressed air circuit (50) comprises a compressed air tank (51); a pressure sensor (53), disposed upstream of said tank (51); and a pneumatic valve (54), configured to release the compressed air to the dry substance trigger chamber (49).

14. The automated device for the controlled feeding of substances to animal containment recipients in an animal breeding installation, according to the preceding claim, **characterized in that** the compressed air tank (51) is pressurized by means of a compressed air compressor (52).

15. The automated device for the controlled feeding of substances to animal containment recipients in an animal breeding installation, according to any one of the preceding claims, **characterized in that** the liquid feeding circuit (22) of the feeding circuit (7) comprises a reservoir of liquid feed substances (55); a first liquid circulation pump (59) downstream of the reservoir of liquid feed substances (55); a first hydraulic valve (60) downstream of the first liquid circulation pump (59) and upstream of the feed head (43); and a second hydraulic valve (62), parallel to the first hydraulic valve (60) and upstream of the reservoir of liquid feed substances (55); and during the course of liquid feeding to an animal containment recipient (2), the first hydraulic valve (60) is in an open position and the second hydraulic valve (62) is in a closed position, wherein the feed liquid pumped by the first liquid circulation pump (59) flows from the reservoir of liquid feed substances (55) to the feed head (43).

16. The automated device for the controlled feeding of substances to animal containment recipients in an animal breeding facility, according to the preceding claim, **characterized in that** the liquid feeding circuit (22) of the feeding circuit (7) comprises a reservoir of cleaning liquid (61); a second liquid displacement pump (58) downstream of the reservoir of cleaning liquid (61) and upstream of the first hydraulic valve (60); and during the course of the cleaning of the liquid feeding circuit, the hydraulic valves (60,62) are opened and closed alternately, such that the cleaning liquid pumped by the second liquid circulation pump (58) cleans the entire piping of the liquid feeding circuit (22).

17. The automated device for the controlled feeding of substances to animal containment recipients in an animal breeding facility, according to any one of the claims 15 and 16, **characterized in that** the liquid feeding circuit (22) of the feeding circuit (7) comprises a homogenization system of the reservoir of liquid feed substances (56).

18. An automated system for the controlled feeding of substances to animal containment recipients in an animal breeding facility, which includes at least one rack for animal containment recipients arranged in a line (1) comprising a plurality of animal containment recipients (2), wherein said recipients are arranged in the form of a grid on said rack, **characterized by** comprising:
an automated device for the controlled feeding of substances to animal containment recipients in an animal breeding facility, as defined in any one of the preceding claims; and
at least one horizontal, linear track (9), which is disposed on the ground and parallel to each rack for animal containment recipients arranged in a line (1), wherein a reflective strip (10) is disposed next to a terminal position of said horizontal, linear track (9).

19. A method of controlled feeding of substances to animal containment recipients in an animal breeding facility, which includes at least one rack for animal containment recipients arranged in a line (1) comprising a plurality of animal containment recipients (2), wherein said recipients are arranged in the form of a grid on said rack, **characterized by** comprising the following steps:
i. an automated device, as defined in any one of claims 1 to 17, travelling alongside at least one rack for animal containment recipients arranged in a line (1);
ii. said automated device detecting a horizontal, linear track (9), which is disposed on the ground and parallel to each rack for animal containment recipients arranged in a line (1);
iii. said automated device moving along the horizontal, linear track (9) by means of a locomotion platform (4), comprised in said automated device, in order to position itself in front of an axis perpendicular to the ground, which passes by a certain animal containment recipient (2);
iv. a lifting mechanism (5) of said automated device adjusting the position of a feeding platform (6) along said axis perpendicular to the ground, which passes by a certain animal containment recipient (2), in order to position the feeding platform (6) at the height of a certain animal containment recipient (2);
v. The feeding platform (6) adjusting the position of a gear rack (17) along a plane parallel to the ground, in order for a feed head (43) to reach a substance feeding zone in a certain animal containment recipient (2);
vi. The automated device repeating the preceding steps until the feed is supplied to a predetermined set of animal containment recipients (2) arranged on the rack (1).

20. The method of controlled feeding of substances to animal containment recipients in an animal breeding facility, according to the preceding claim, **characterized in that** the animal containment recipient (2) is a tank for housing fish.

21. The method of controlled feeding of substances to animal containment recipients in an animal breeding facility, according to the preceding claim, **characterized in that** the fish are selected from one or more of the group consisting of *Danio rerio, Danionella translucida, Devario aequipinnatus, Nothobranchius furzeri, Oryzias latipes* and *Xenopus spp.*

## Patentansprüche

1. Eine automatisierte Vorrichtung zur kontrollierten Zufuhr von Substanzen an Tierhaltungsbehälter in einer Tierzuchtanlage, die mindestens ein Gestell für Tierhaltungsbehälter umfasst, die in einer Reihe (1) angeordnet sind und eine Vielzahl von Tierhaltungsbehältern (2) umfassen, wobei die Behälter in Form eines Gitters auf dem Gestell angeordnet sind, umfassend:
einen Roboter (3), der eine Fortbewegungsplattform (4) umfasst; einen Hebemechanismus (5); eine Zufuhrplattform (6); einen Zufuhrkreislauf (7); und eine zentrale Verarbeitungseinheit (8);
wobei der Roboter (3) so konfiguriert ist, dass er auf mindestens einer horizontalen, linearen Schiene (9) fährt, die parallel zu jedem Gestell für Tierhaltungsbehälter angeordnet ist, die in einer Reihe (1) angeordnet sind, wobei ein reflektierender Streifen (10) neben einer Endposition der horizontalen, linearen Schiene (9) angeordnet ist;
wobei die Fortbewegungsplattform (4) mindestens ein Antriebsrad (11), eine erste Motorisierungseinheit (12) und eine sensorische Navigationseinheit (13) umfasst; wobei die sensorische Navigationseinheit (13) so konfiguriert ist, dass sie die Plattform im Arbeitsbereich lokalisiert und navigiert und den reflektierenden Streifen (10) erkennt, und die erste Motorisierungseinheit (12) so konfiguriert ist, dass sie die Fortbewegungsplattform (4) entlang der horizontalen, linearen Schiene (9) bewegt;
wobei der Hebemechanismus (5) eine Hebestange (14), die senkrecht zur horizontalen, linearen Schiene (9) steht, und eine zweite Motorisierungseinheit (16) umfasst, die dazu konfiguriert ist, die Zufuhrplattform (6) entlang der Hebestange (14) zu bewegen, und wobei der Hebemechanismus (5) mit der Fortbewegungsplattform (4) verbunden ist;
wobei die Zufuhrplattform (6) eine Zahnstange (17) umfasst, die mit einem Futterkopf (43) verbunden ist; eine sensorische Fütterungseinheit (18), die so konfiguriert ist, dass sie Daten über die Position des Futterkopfes (43) in Bezug auf die Fütterungszone des Tierhaltungsbehälters (2) an die zentrale Verarbeitungseinheit (8) sendet; eine zweite Verarbeitungseinheit (19); eine dritte Motorisierungseinheit (20), die so konfiguriert ist, dass sie die Zahnstange (17) entlang einer horizontalen Achse, die senkrecht zur Hebestange (14) steht, bewegt, damit der Futterkopf (43) die Substanzzufuhrzone in einem Tierhaltungsbehälter (2) erreichen kann;
wobei der Zufuhrkreislauf (7) einen oder mehrere Zufuhrkreisläufe umfasst, die aus der Gruppe ausgewählt sind, die aus einem Trockenzufuhrkreislauf (21) und einem Flüssigkeitzufuhrkreislauf (22) besteht;
wobei die zentrale Verarbeitungseinheit (8) Daten bezüglich der Position, Ausrichtung und Geschwindigkeit in Bezug auf die Fortbewegungsplattform (4) empfängt, wobei die Daten von der sensorischen Navigationseinheit (13) erfasst und von der zentralen Verarbeitungseinheit (8) verarbeitet werden;
wobei die zentrale Verarbeitungseinheit (8) Daten bezüglich Zufuhrparametern für jeden Tierhaltungsbehälter (2) empfängt, wobei die Daten von der sensorischen Zufuhreinheit (18) erfasst und von der zweiten Verarbeitungseinheit (19) verarbeitet werden;
wobei die zentrale Verarbeitungseinheit (8) die Bewegung der Fortbewegungsplattform (4) entlang mindestens einer horizontalen, linearen Schiene (9) und entlang mindestens eines an eine horizontale, lineare Schiene (9) angrenzenden Durchgangs, die Bewegung der Fütterungsplattform (6) entlang der Hebestange (14) und die Fütterung der Tierhaltungsbehälter (2) durch den Futterkopf (43) steuert.

2. Die automatisierte Vorrichtung zur kontrollierten Zufuhr von Substanzen zu Tierhaltungsbehältern in einer Tierzuchtanlage gemäß dem vorstehenden Anspruch, **dadurch gekennzeichnet, dass** die Fortbewegungsplattform (4) mindestens zwei Antriebsräder (11) und mindestens vier Lenkrollen (23) umfasst, wobei zwei Lenkrollen (23) in einer vorderen Position in Bezug auf die Antriebsräder (11) und zwei Lenkrollen (23) in einer hinteren Position in Bezug auf die Antriebsräder (11) angeordnet sind.

3. Die automatisierte Vorrichtung zur kontrollierten Zufuhr von Substanzen zu Tierhaltungsbehältern in einer Tierzuchtanlage gemäß dem vorstehenden Anspruch, **dadurch gekennzeichnet, dass** die Fortbewegungsplattform (4) an ihrer Basis mindestens einen Rollenschieber für die lineare Schiene (29) umfasst, der so konfiguriert ist, dass er zur horizontalen, linearen Schiene (9) ausgerichtet ist.

4. Die automatisierte Vorrichtung zur kontrollierten Zufuhr von Substanzen zu Tierhaltungsbehältern in einer Tierzuchtanlage gemäß einem der vorstehenden Ansprüche, **dadurch gekennzeichnet, dass** die erste Motorisierungseinheit (12) mindestens einen Motor (24) und ein Getriebe (25) umfasst, wobei die Kraft mittels mindestens einer Riemenscheibe (26) und eines Antriebsriemens (27) auf die Antriebsräder (11) übertragen wird.

5. Die automatisierte Vorrichtung zur kontrollierten Zufuhr von Substanzen zu Tierhaltungsbehältern in einer Tierzuchtanlage gemäß einem der vorstehenden Ansprüche, **dadurch gekennzeichnet, dass** die sensorische Navigationseinheit (13) einen oder mehrere Sensoren umfasst, die aus der Gruppe ausgewählt wurden, die aus einem Laserscannersensor (30), einem inkrementallen Drehgebersensor (31), einem optischen Sensor zum Verfolgen eines reflektierenden Streifens (32) und einer Trägheitsmesseinheit (33) umfasst, die so konfiguriert sind, dass sie Daten über die Position, die Ausrichtung und die Geschwindigkeit der Fortbewegungsplattform (4) erfassen.

6. Die automatisierte Vorrichtung zur kontrollierten Zufuhr von Substanzen zu Tierhaltungsbehältern in einer Tierzuchtanlage gemäß einem der vorstehenden Ansprüche, **dadurch gekennzeichnet, dass** die horizontale, lineare Schiene (9) mehrere Markierungen (36) umfasst, die entlang der Länge der linearen Schiene angeordnet sind und aus der Gruppe ausgewählt wurden, die aus Markierungen besteht, die durch optische Sensoren oder durch Magnetsensoren erfasst werden können.

7. Die automatisierte Vorrichtung zur kontrollierten Zufuhr von Substanzen zu Tierhaltungsbehältern in einer Tierzuchtanlage, gemäß einem der vorstehenden Ansprüche, **dadurch gekennzeichnet, dass** der Hebemechanismus (5) mindestens einen Motor des Hebemechanismus (15) umfasst, wobei die Antriebskraft mittels mindestens einer Riemenscheibe (38) und eines Antriebsriemens (39) auf die Zufuhrplattform (6) übertragen wird, wobei die Hebestange (14) eine Spindelstruktur ist, die so konfiguriert ist, dass sie die Winkelrotation in eine lineare Bewegung umwandelt.

8. Die automatisierte Vorrichtung zur kontrollierten Zufuhr von Substanzen zu Tierhaltungsbehältern in einer Tierzuchtanlage gemäß einem der vorstehenden Ansprüche, **dadurch gekennzeichnet, dass** die dritte Motorisierungseinheit (20) der Zufuhrplattform (7) mindestens einen Motor (42) umfasst, um die Zahnstange (17) entlang einer horizontalen Achse zu bewegen, die senkrecht zur Hebestange (14) steht, damit der Futterkopf (43) die Substanzzufuhrzone in einem Tierhaltungsbehälter (2) erreichen kann.

9. Die automatisierte Vorrichtung zur kontrollierten Zufuhr von Substanzen zu Tierhaltungsbehältern in einer Tierzuchtanlage gemäß einem der vorstehenden Ansprüche, **dadurch gekennzeichnet, dass** die sensorische Zufuhreinheit (18) einen digitalen Bildaufnahmesensor (44) umfasst, der so konfiguriert ist, dass er Muster in der Zahnstange (1) für Tierhaltungsbehälter (2) erkennt.

10. Die automatisierte Vorrichtung zur kontrollierten Zufuhr von Substanzen zu Tierhaltungsbehältern in einer Tierzuchtanlage gemäß einem der vorstehenden Ansprüche, **dadurch gekennzeichnet, dass** die sensorische Zufuhreinheit (18) einen Abstandsmesssensor (45) umfasst, der so konfiguriert ist, dass er den Abstand zwischen dem Futterkopf (43) und der Substanzzufuhrzone in einem Tierhaltungsbehälter (2) misst.

11. Die automatisierte Vorrichtung zur kontrollierten Zufuhr von Substanzen an Tierhaltungsbehälter in einer Tierzuchtanlage gemäß einem der vorstehenden Ansprüche, **dadurch gekennzeichnet, dass** die sensorische Zufuhreinheit (18) einen Barcode-Lesesensor (46) umfasst, der so konfiguriert ist, dass er Zufuhrparameter in Bezug auf einen bestimmten Tierhaltungsbehälter (2) liest.

12. Die automatisierte Vorrichtung zur kontrollierten Zufuhr von Substanzen zu Tierhaltungsbehältern in einer Tierzuchtanlage gemäß einem der vorstehenden Ansprüche, **dadurch gekennzeichnet, dass** der Trockenzufuhrkreislauf (21) des Zufuhrkreislaufs (7) einen Vorratsbehälter für Trockenzufuhrsubstanzen (47) umfasst; einen Motor (48), der so konfiguriert ist, dass er einen Teil der Trockenzufuhrsubstanzenl in eine Trockensubstanzen-Auslösekammer (49) bewegt; und einen Druckluftkreislauf (50), der so konfiguriert ist, dass er den Teil der Trockenzufuhrsubstanzen aus der Trockensubstanzen-Auslösekammer (49) zum Futterkopf (43) befördert.

13. Die automatisierte Vorrichtung zur kontrollierten Zufuhr von Substanzen zu Tierhaltungsbehältern in einer Tierzuchtanlage gemäß dem vorstehenden Anspruch, **dadurch gekennzeichnet, dass** der Druckluftkreislauf (50) einen Drucklufttank (51), einen Drucksensor (53), der stromaufwärts von dem Tank (51) angeordnet ist, und ein pneumatisches Ventil (54) umfasst, das so konfiguriert ist, dass es die Druckluft an die Trockensubstanz-Auslösekammer (49) abgibt.

14. Die automatisierte Vorrichtung zur kontrollierten Zufuhr von Substanzen zu Tierhaltungsbehältern in einer Tierzuchtanlage gemäß dem vorstehenden Anspruch, **dadurch gekennzeichnet, dass** der Druckluftbehälter (51) mittels eines Druckluftkompressors (52) unter Druck gesetzt wird.

15. Die automatisierte Vorrichtung zur kontrollierten Zuführung von Substanzen zu Tierhaltungsbehältern in einer Tierzuchtanlage gemäß einem der vorstehenden Ansprüche, **dadurch gekennzeichnet, dass** der Flüssigkeitszufuhrkreislauf (22) des Zufuhrkreislaufs (7) einen Vorratsbehälter für flüssige Zufuhrsubstanzen (55), eine erste Flüssigkeitsumwälzpumpe (59) stromabwärts des Vorratsbehälters für flüssige Zufuhrsubstanzen (55), ein erstes Hydraulikventil (60) stromabwärts der ersten Flüssigkeitsumwälzpumpe (59) und stromaufwärts des Futterkopfes (43); und ein zweites Hydraulikventil (62), parallel zum ersten Hydraulikventil (60) und stromaufwärts des Vorratsbehälters für flüssige Zufuhrsubstanzen (55); und während der Zufuhr von Flüssigkeit zu einem Tierhaltungsbehälter (2) befindet sich das erste Hydraulikventil (60) in einer offenen Position und das zweite Hydraulikventil (62) in einer geschlossenen Position, wobei die von der ersten Flüssigkeitsumwälzpumpe (59) geförderte Zufuhrflüssigkeit aus dem Vorratsbehälter für flüssige Zufuhrsubstanzen (55) zum Futterkopf (43) fließt.

16. Die automatisierte Vorrichtung zur kontrollierten Zufuhr von Substanzen zu Tierhaltungsbehältern in einer Tierzuchtanlage gemäß dem vorstehenden Anspruch, **dadurch gekennzeichnet, dass** der Flüssigkeitszufuhrkreislauf (22) des Zufuhrkreislaufs (7) einen Vorratsbehälter für Reinigungsflüssigkeit (61) umfasst; eine zweite Flüssigkeitsverdrängungspumpe (58) stromabwärts des Reinigungsflüssigkeitsbehälters (61) und stromaufwärts des ersten Hydraulikventils (60); und während der Reinigung des Flüssigkeitszufuhrkreislaufs die Hydraulikventile (60, 62) abwechselnd geöffnet und geschlossen werden, so dass die von der zweiten Flüssigkeitsumwälzpumpe (58) gepumpte Reinigungsflüssigkeit die gesamte Verrohrung des Flüssigkeitszufuhrkreislaufs (22) reinigt.

17. Die automatisierte Vorrichtung zur kontrollierten Zufuhr von Substanzen zu Tierhaltungsbehältern in einer Tierzuchtanlage gemäß einem der Ansprüche 15 und 16, **dadurch gekennzeichnet, dass** der Flüssigkeitszufuhrkreislaufes (22) des Zufuhrkreislaufes (7) ein Homogenisierungssystem des Vorratsbehälters für flüssige Zufuhrsubstanzen (56) umfasst.

18. Ein automatisiertes System zur kontrollierten Zufuhr von Substanzen zu Tierhaltungsbehältern in einer Tierzuchtanlage, das mindestens ein Gestell für Tierhaltungsbehälter umfasst, die in einer Reihe (1) angeordnet sind, die mehrere Tierhaltungsbehälter (2) umfasst, wobei die Behälter in Form eines Gitters auf dem Gestell angeordnet sind, **dadurch gekennzeichnet, dass** es umfasst:
eine automatisierte Vorrichtung zur kontrollierten Zufuhr von Substanzen zu Tierhaltungsbehältern in einer Tierzuchtanlage, wie in einem der vorstehenden Ansprüche definiert; und
mindestens eine horizontale, lineare Schiene (9), die auf dem Boden und parallel zu jedem Gestell für Tierhaltungsbehälter angeordnet ist, die in einer Reihe (1) angeordnet sind, wobei ein reflektierender Streifen (10) neben einer Endposition der horizontalen, linearen Schiene (9) angeordnet ist.

19. Ein Verfahren zur kontrollierten Zufuhr von Substanzen zu Tierhaltungsbehältern in einer Tierzuchtanlage, die mindestens ein Gestell für Tierhaltungsbehälter umfasst, die in einer Reihe (1) angeordnet sind und mehrere Tierhaltungsbehälter (2) umfassen, wobei die Behälter in Form eines Gitters auf dem Gestell angeordnet sind, **dadurch gekennzeichnet, dass** es die folgenden Schritte umfasst:
i. eine automatisierte Vorrichtung, wie in einem der Ansprüche 1 bis 17 definiert, die entlang mindestens einem in einer Reihe (1) angeordneten Gestell für Tierhaltungsbehälter fährt;
ii. die automatisierte Vorrichtung, die eine horizontale, lineare Schiene (9) erkennt, die auf dem Boden und parallel zu jedem in einer Reihe (1) angeordneten Gestell für Tierhaltungsbehälter angeordnet ist;
iii. die automatisierte Vorrichtung, die sich entlang der horizontalen, linearen Schiene (9) mittels einer Fortbewegungsplattform (4) bewegt, die die automatisierte Vorrichtung umfasst, um sich vor der zum Boden senkrechten Achse zu positionieren, die bei einem bestimmten Tierhaltungsbehälter (2) vorbeigeht;
iv. ein Hebemechanismus (5) der automatisierten Vorrichtung, der die Position der Zufuhrplattform (6) entlang der zum Boden senkrechten Achse anpasst, die bei einem bestimmten Tierhaltungsbehälter (2) vorbeigeht, um die Zufuhrplattform (6) auf der Höhe eines bestimmten Tierhaltungsbehälter zu positionieren;
v. Die Zufuhrplattform (6) passt sich der Zahnstange (17) entlang einer zum Boden parallelen Ebene an, damit der Futterkopf (43) die Substanzzufuhrzone in einem bestimmten Tierhaltungsbehälter erreicht (2);
vi. Die automatisierte Vorrichtung wiederholt die vorstehenden Schritte bis das Futters einer vorgegebenen Reihe an Tierhaltungsbehältern (2), die in einer Reihe (1) angeordnet sind, bereitgestellt wurde.

20. Das Verfahren zur kontrollierten Zufuhr von Substanzen zu Tierhaltungsbehältern in einer Tierzuchtanlage, gemäß den vorstehenden Ansprüchen, **gekennzeichnet dadurch, dass** der Tierhaltungsbehälter (2) ein Becken für die Unterbringung von Fischen ist.

21. Das Verfahren zur kontrollierten Zufuhr von Substanzen zu Tierhaltungsbehältern in einer Tierzuchtanlage, gemäß den vorstehenden Ansprüchen, **gekennzeichnet dadurch, dass** der Fisch von einer oder mehreren Gruppen, bestehend aus *Danio rerio, Danionella translucida, Devario aequipinnatus, Nothobranchius furzeri, Oryzias latipes* and *Xenopus spp.,* ausgewählt wird.

## Revendications

1. Dispositif automatisé pour l'alimentation contrôlée de substances dans des récipients de confinement des animaux dans une installation d'élevage, qui comprend au moins un support pour récipients de confinement des animaux, disposé en ligne (1) et comprenant une pluralité de récipients de confinement des animaux (2), dans lequel lesdits récipients sont disposés sous la forme d'une grille sur ledit support, comprenant:
un robot (3), comprenant une plate-forme de locomotion (4); un mécanisme de levage (5);
une plate-forme d'alimentation (6); un circuit d'alimentation (7); et une unité centrale de traitement (8);
dans lequel le robot (3) est configuré pour se déplacer sur au moins une voie horizontale linéaire (9), qui est disposée parallèlement à chaque support pour récipients de confinement d'animaux disposés en ligne (1), dans lequel une bande réfléchissante (10) est disposée à côté d'une position terminale de ladite voie horizontale linéaire (9);
dans lequel la plate-forme de locomotion (4) comprend au moins une roue motrice (11); une première unité de motorisation (12) et une unité de navigation sensorielle (13); l'unité de navigation sensorielle (13) étant configurée pour localiser et naviguer la plate-forme dans l'espace de travail et pour détecter la bande réfléchissante (10) et la première unité de motorisation (12) configurée pour déplacer la plate-forme de locomotion (4) le long de la voie linéaire horizontale (9);
dans laquelle le mécanisme de levage (5) comprend une tige de levage (14), qui est perpendiculaire à la voie horizontale linéaire (9); et une deuxième unité de motorisation (16), qui est configurée pour déplacer la plate-forme d'alimentation (6) le long de la tige de levage (14); et le mécanisme de levage (5) est relié à la plate-forme de locomotion (4);
dans lequel la plate-forme d'alimentation (6) comprend une crémaillère (17) qui est reliée à une tête d'alimentation (43); une unité d'alimentation sensorielle (18) qui est configurée pour envoyer des données à l'unité centrale de traitement (8) concernant la position de la tête d'alimentation (43) par rapport à la zone d'alimentation du récipient de confinement des animaux (2); une deuxième unité de traitement (19); une troisième unité de motorisation (20), qui est configurée pour déplacer la crémaillère (17) le long d'un axe horizontal, qui est perpendiculaire à la tige de levage (14), afin que la tête d'alimentation (43) atteigne la zone d'alimentation en substance dans un récipient de confinement d'animaux (2);
dans lequel le circuit d'alimentation (7) comprend un ou plusieurs circuits d'alimentation choisis parmi le groupe constitué d'un circuit d'alimentation en produit sec (21) et d'un circuit d'alimentation en produit liquide (22);
dans lequel l'unité centrale de traitement (8) reçoit des données concernant la position, l'orientation et la vitesse relatives à la plate-forme de locomotion (4), lesdites données étant collectées par l'unité de navigation sensorielle (13) et traitées par l'unité centrale de traitement (8);
dans lequel l'unité centrale de traitement (8) reçoit des données concernant les paramètres d'alimentation pour chaque récipient de confinement d'animaux (2), lesdites données étant collectées par l'unité sensorielle d'alimentation (18) et traitées par la deuxième unité de traitement (19);
dans lequel l'unité centrale de traitement (8) commande le mouvement de la plate-forme de locomotion (4) le long d'au moins une voie horizontale linéaire (9) et le long d'au moins un passage adjacent à une voie horizontale linéaire (9), le mouvement de la plate-forme d'alimentation (6) le long de la tige de levage (14) et l'alimentation des récipients de confinement d'animaux (2) par la tête d'alimentation (43).

2. Dispositif automatisé pour l'alimentation contrôlée de substances dans des récipients de confinement d'animaux dans une installation d'élevage, selon la revendication précédente, **caractérisé en ce que** la plate-forme de locomotion (4) comprend au moins deux roues motrices (11) et au moins quatre roulettes (23), deux roulettes (23) étant disposées en position avant par rapport auxdites roues motrices (11) et deux roulettes (23) étant disposées en position arrière par rapport auxdites roues motrices (11).

3. Dispositif automatisé pour l'alimentation contrôlée de substances à des récipients contenant des animaux dans une installation d'élevage, selon la revendication précédente, **caractérisé en ce que** la plate-forme de locomotion (4) comprend à sa base au moins un patin à roulette pour la voie linéaire (29), configuré pour s'aligner avec la voie linéaire horizontale (9).

4. Dispositif automatisé pour l'alimentation contrôlée de substances à des récipients contenant des animaux dans une installation d'élevage, selon l'une quelconque des revendications précédentes, **caractérisé en ce que** la première unité de motorisation (12) comprend au moins un moteur (24) et une réducteur (25), dans lequel la puissance est transférée aux roues motrices (11) au moyen d'au moins une poulie (26) et d'une courroie de transmission (27).

5. Dispositif automatisé pour l'alimentation contrôlée de substances à des récipients de confinement d'animaux dans une installation d'élevage, selon l'une quelconque des revendications précédentes, **caractérisé en ce que** l'unité de navigation sensorielle (13) comprend un ou plusieurs capteurs choisis parmi le groupe constitué d'un capteur à balayage laser (30), d'un capteur à encodeur rotatif incrémental (31), un capteur optique pour suivre une bande réfléchissante (32) et une unité de mesure inertielle (33), configurée pour collecter des données relatives à la position, à l'orientation et à la vitesse de la plate-forme de locomotion (4).

6. Dispositif automatisé pour l'alimentation contrôlée de substances à des récipients contenant des animaux dans une installation d'élevage, selon l'une quelconque des revendications précédentes, **caractérisé en ce que** la voie horizontale linéaire (9) comprend une pluralité de marqueurs (36), disposés sur la longueur de ladite voie linéaire, qui sont choisis parmi le groupe comprenant des marqueurs détectables par des capteurs optiques ou par des capteurs magnétiques.

7. Dispositif automatisé pour l'alimentation contrôlée de substances à des récipients contenant des animaux dans une installation d'élevage, selon l'une quelconque des revendications précédentes, **caractérisé en ce que** le mécanisme de levage (5) comprend au moins un moteur du mécanisme de levage (15), dans lequel la force motrice est transmise à la plate-forme d'alimentation (6) au moyen d'au moins une poulie (38) et d'une courroie de transmission (39), dans lequel la tige de levage (14) est une structure à broche, configurée pour convertir la rotation angulaire en mouvement linéaire.

8. Dispositif automatisé pour l'alimentation contrôlée de substances dans des récipients de confinement des animaux dans une installation d'élevage, selon l'une quelconque des revendications précédentes, **caractérisé en ce que** la troisième unité de motorisation (20) de la plate-forme d'alimentation (7) comprend au moins un moteur (42) pour déplacer la crémaillère (17) le long d'un axe horizontal, qui est perpendiculaire à la tige de levage (14), afin que la tête d'alimentation (43) atteigne la zone d'alimentation en substances dans un récipient de confinement d'animaux (2).

9. Dispositif automatisé pour l'alimentation contrôlée de substances dans des récipients de confinement d'animaux dans une installation d'élevage, selon l'une quelconque des revendications précédentes, **caractérisé en ce que** l'unité d'alimentation sensorielle (18) comprend un capteur de capture d'images numériques (44), configuré pour détecter des motifs dans la crémaillère (1) pour récipients de confinement d'animaux (2).

10. Dispositif automatisé pour l'alimentation contrôlée de substances dans des récipients de confinement des animaux dans une installation d'élevage, selon l'une quelconque des revendications précédentes, **caractérisé en ce que** l'unité d'alimentation sensorielle (18) comprend un capteur de mesure de distance (45), configuré pour mesurer la distance entre la tête d'alimentation (43) et la zone d'alimentation en substance dans un récipient de confinement des animaux (2).

11. Dispositif automatisé pour l'alimentation contrôlée de substances à des récipients de confinement des animaux dans une installation d'élevage, selon l'une quelconque des revendications précédentes, **caractérisé en ce que** l'unité d'alimentation sensorielle (18) comprend un capteur de lecture de code-barres (46), configuré pour lire des paramètres d'alimentation liés à un certain récipient de confinement des animaux (2).

12. Dispositif automatisé pour l'alimentation contrôlée de substances à des récipients de confinement d'animaux dans une installation d'élevage, selon l'une quelconque des revendications précédentes, **caractérisé en ce que** le circuit d'alimentation en substance sèche (21) du circuit d'alimentation (7) comprend un réservoir de substances alimentaires sèches (47) ; un moteur (48), configuré pour déplacer une partie de la substance alimentaire sèche vers une chambre de déclenchement de substance sèche (49) ; et un circuit d'air comprimé (50), configuré pour propulser ladite partie de substance alimentaire sèche depuis la chambre de déclenchement de substance sèche (49) vers la tête d'alimentation (43).

13. Dispositif automatisé pour l'alimentation contrôlée de substances à des récipients de confinement d'animaux dans une installation d'élevage, selon la revendication précédente, **caractérisé en ce que** le circuit d'air comprimé (50) comprend un réservoir d'air comprimé (51); un capteur de pression (53), disposé en amont dudit réservoir (51); et une vanne pneumatique (54), configurée pour libérer l'air comprimé vers la chambre de déclenchement de substance sèche (49).

14. Dispositif automatisé pour l'alimentation contrôlée de substances dans des récipients contenant des animaux dans une installation d'élevage, selon la revendication précédente, **caractérisé en ce que** le réservoir d'air comprimé (51) est mis sous pression au moyen d'un compresseur d'air comprimé (52).

15. Dispositif automatisé pour l'alimentation contrôlée de substances dans des récipients contenant des animaux dans une installation d'élevage, selon l'une quelconque des revendications précédentes, **caractérisé en ce que** le circuit d'alimentation en liquide (22) du circuit d'alimentation (7) comprend un réservoir de substances liquides d'alimentation (55); une première pompe de circulation de liquide (59) en aval du réservoir de substances liquides d'alimentation (55); une première vanne hydraulique (60) en aval de la première pompe de circulation de liquide (59) et en amont de la tête d'alimentation (43); et une deuxième vanne hydraulique (62), parallèle à la première vanne hydraulique (60) et en amont du réservoir de substances liquides d'alimentation (55); et pendant l'alimentation en liquide d'un récipient de confinement d'animaux (2), la première vanne hydraulique (60) est en position ouverte et la deuxième vanne hydraulique (62) est en position fermée, dans lequel le liquide d'alimentation pompé par la première pompe de circulation de liquide (59) s'écoule du réservoir de substances liquides d'alimentation (55) vers la tête d'alimentation (43).

16. Dispositif automatisé pour l'alimentation contrôlée de substances dans des récipients de confinement d'animaux dans une installation d'élevage, selon la revendication précédente, **caractérisé en ce que** le circuit d'alimentation en liquide (22) du circuit d'alimentation (7) comprend un réservoir de liquide de nettoyage (61); une deuxième pompe de déplacement de liquide (58) en aval du réservoir de liquide de nettoyage (61) et en amont de la première vanne hydraulique (60); et pendant le nettoyage du circuit d'alimentation en liquide, les vannes hydrauliques (60, 62) sont ouvertes et fermées alternativement, de telle sorte que le liquide de nettoyage pompé par la deuxième pompe de circulation de liquide (58) nettoie l'ensemble de la tuyauterie du circuit d'alimentation en liquide (22).

17. Dispositif automatisé pour l'alimentation contrôlée de substances dans des récipients de confinement d'animaux dans une installation d'élevage, selon l'une quelconque des revendications 15 et 16, **caractérisé en ce que** le circuit d'alimentation en liquide (22) du circuit d'alimentation (7) comprend un système d'homogénéisation du réservoir de substances liquides d'alimentation (56).

18. Système automatisé pour l'alimentation contrôlée de substances à des récipients de confinement d'animaux dans une installation d'élevage, qui comprend au moins un support pour récipients de confinement d'animaux disposés en ligne (1) comprenant une pluralité de récipients de confinement d'animaux (2), dans lequel lesdits récipients sont disposés sous la forme d'une grille sur ledit support, **caractérisé en ce qu'**il comprend:
un dispositif automatisé pour l'alimentation contrôlée de substances dans des récipients de confinement des animaux dans une installation d'élevage, tel que défini dans l'une quelconque des revendications précédentes; et
au moins une voie linéaire horizontale (9), qui est disposée sur le sol et parallèlement à chaque support pour récipients de confinement des animaux disposés en ligne (1), dans lequel une bande réfléchissante (10) est disposée à côté d'une position terminale de ladite voie linéaire horizontale (9).

19. Procédé d'alimentation contrôlée en substances de récipients de confinement des animaux dans une installation d'élevage, qui comprend au moins un support pour récipients de confinement des animaux disposés en ligne (1) comprenant une pluralité de récipients de confinement des animaux (2), dans lequel lesdits récipients sont disposés sous la forme d'une grille sur ledit support, **caractérisé en ce qu'**il comprend les étapes suivantes :
i. un dispositif automatisé, tel que défini dans l'une quelconque des revendications 1 à 17, se déplaçant le long d'au moins un support pour récipients de confinement des animaux disposés en ligne (1);
ii. ledit dispositif automatisé détectant une voie horizontale linéaire (9), qui est disposée sur le sol et parallèle à chaque support pour récipients de confinement des animaux disposés en ligne (1);
iii. ledit dispositif automatisé se déplaçant le long de la voie horizontale et linéaire (9) au moyen d'une plate-forme de locomotion (4), comprise dans ledit dispositif automatisé, afin de se positionner devant un axe perpendiculaire au sol, qui passe par un certain récipient de confinement d'animaux (2);
iv. un mécanisme de levage (5) dudit dispositif automatisé ajustant la position d'une plate-forme d'alimentation (6) le long dudit axe perpendiculaire au sol, qui passe par un certain récipient de confinement d'animaux (2), afin de positionner la plate-forme d'alimentation (6) à la hauteur d'un certain récipient de confinement d'animaux (2);
v. la plate-forme d'alimentation (6) ajustant la position d'une crémaillère (17) le long d'un plan parallèle au sol, afin qu'une tête d'alimentation (43) puisse atteindre une zone d'alimentation en substance dans un certain récipient de confinement d'animaux (2);
vi. le dispositif automatisé répétant les étapes précédentes jusqu'à ce que l'alimentation soit fournie à un ensemble prédéterminé de récipients de confinement d'animaux (2) disposés sur le support (1).

20. Procédé d'alimentation contrôlée en substances de récipients de confinement d'animaux dans une installation d'élevage d'animaux, selon la revendication précédente, **caractérisé en ce que** le récipient de confinement d'animaux (2) est un réservoir destiné à loger des poissons.

21. Procédé d'alimentation contrôlée en substances de récipients de confinement d'animaux dans une installation d'élevage d'animaux, selon la revendication précédente, **caractérisé en ce que** les poissons sont choisis parmi un ou plusieurs membres du groupe constitué par *Danio rerio, Danionella translucida, Devario aequipinnatus, Nothobranchius furzeri, Oryzias latipes* et *Xenopus spp.*
